Europäisches Patentamt

European Patent Office

Office européen des brevets

(11) Veröffentlichungsnummer: **0 144 870**
A2

# (12) EUROPÄISCHE PATENTANMELDUNG

(21) Anmeldenummer: **84114180.7**

(22) Anmeldetag: **23.11.84**

(51) Int. Cl.⁴: **B 21 D 13/00**
**E 04 C 2/32**

(30) Priorität: **26.11.83 DE 3342691**

(43) Veröffentlichungstag der Anmeldung:
**19.06.85 Patentblatt 85/25**

(84) Benannte Vertragsstaaten:
**AT BE CH DE FR GB IT LI LU NL SE**

(71) Anmelder: **Munz, Erich**
**Weststrasse 11**
**D-5204 Lohmar 1 - Geber(DE)**

(72) Erfinder: **Munz, Erich**
**Weststrasse 11**
**D-5204 Lohmar 1 - Geber(DE)**

(74) Vertreter: **Wolf, Günter, Dipl.Ing.**
**Patentanwälte Dipl.-Ing. Amthor Dipl.-Ing. Wolf Postfach**
**70 02 45 An der Mainbrücke 16**
**D-6450 Hanau 7(DE)**

(54) **Karosserieblech.**

(57) Das Karosserieblech besteht aus einem Blechzuschnitt mit ausgeprägten, ineinander übergehenden Versteifungswölbungen. Die Versteifungswölbungen sind aus dem ebenen Blechzuschnitt regelmäßig nach beiden Seiten der Blechzuschnittsfläche ausgeprägt und mit einer Tiefe versehen, die maximal einem Drittel der Gesamtstärke (S) des geprägten Blechzuschnittes entspricht. Der maximale Durchmesser (D) der Versteifungswölbung (1) entspricht maximal etwa dem Zehnfachen der Blechstärke $(S_1)$ des Bleches.

Fig.1

EP 0 144 870 A2

## Karosserieblech

Die Erfindung betrifft ein Karosserieblech gemäß
Oberbegriff des Hauptanspruches.

Bleche der genannten Art sind nach der DE-PS
8 26 636 bekannt. Bei diesem vorbekannten Blech
handelt es sich allerdings um ein Wellblech im
herkömmlichen Sinne, wobei jeder Wellenzug zusätzlich in sich nach der anderen Seite ausgeprägte
"Eintiefungen" aufweist und zwar derart, daß die
Eintiefungen des einen Wellenzuges den entgegengesetzt gerichteten "Eintiefungen" der benachbarten
Wellenzüge gegenübersteht, d.h. die Wellenzüge eines solchen Wellbleches sind in sich verformt, was
nur möglich ist, wenn beim Verformen kleine Sicken
mit eingeformt werden, die sich von Wellenberg zu
Wellental erstrecken, wobei die Sicken deshalb erforderlich sind, weil die Eintiefungen nicht aus einer in sich ebenen, sondern aus einer gewellten
Blechfläche ausgeprägt werden. Im Grunde bleibt dabei die Grundform eines Wellbleches erhalten, d.h.,
in bezug auf die Gesamtstärke des verformten Wellbleches (senkrechte Distanz zwischen den Wellenkuppen) bleibt diese erhalten, da es nur darum geht,
die nur in einer Richtung bei Wellblechen gegebene
Steifigkeit auch in der anderen Richtung zu verbessern und sich die Anordnung einer zu den ursprünglichen Wellen verlaufende Querwellung als nicht geeigneter Weg erwies, wie in der DE-PS 8 26 636 angegeben. Außerdem ist dabei zwangsläufig die Stärke des Bleches selbst wesentlich geringer als die jeweilige Tiefe bzw. Höhe der Prägungen selbst so daß derartige vorbekannte Welltafeln auch nur für eine Verwendung insbesondere als Bauplatten in herkömmlichem Sinne in Betracht kommen.

Beispielsweise und insbesondere im Bereich der Autoindustrie ist man aus Gründen der Gewichtsersparnis bemüht, die zu verarbeitenden Bleche so dünn wie möglich zu halten, welchem Bemühen jedoch zwangsläufig aus Gründen der Formsteifigkeit Grenzen gesetzt sind. Gleiches gilt auch für Gerätegehäuse bzw. -verkleidungen von bspw. Waschmaschinen, Ölöfen, Geschirrspülern od. dgl. technischen Geräten, die einer Gehäuseummantelung, also einer "Karosserie" bedürfen, d.h. unter Karosserieblech sind im vorliegenden Fall auch Bleche für derartige Verwendungen zu verstehen.

Um einem flächig zu verarbeitenden, relativ dünnen und glatten Blech die notwendige Steifigkeit zu vermitteln, ist es natürlich auch bekannt, in bestimmten Bereichen des Bleches Prägungen vorzusehen, die jedoch bezüglich ihrer Abmessungen ebenfalls beträchtlich über die eigentliche Blechstärke hinausgehen. Die vorerwähnten Wellbleche sind dafür das
beste Beispiel. Derartige Wellenprägungen mögen
zwar für versteckliegende Gehäuse- oder Karosserieteile (Bodenbleche, Innenholme) angängig sein, mit
einer Gewichtsersparnis haben aber derartige Wellenprägungen nur insofern etwas zu tun, als man damit
für tragende Teile auch im Feinblechbereich bleiben
kann und eine weitere Gewichtsersparnis nur durch
relativ große Lochungen erreichen kann, die in der
Regel aber auch dann nicht vorgesehen werden können,
wenn die betreffenden Flächen der Sicht ausgesetzt
sind oder wenn der umschlossene Innenraum dicht nach
außen abgeschlossen sein soll. Abgesehen davon, können solche Wellverformungen nicht in Bereichen angeordnet und vorgesehen werden, in denen solche Bleche
miteinander verbunden werden müssen, bspw. durch
Punktschweißung.

Der Erfindung liegt demgemäß die Aufgabe zugrunde,
ein Karosserieblech zu schaffen, für das aufgrund
seiner speziellen Flächengestaltung unter Vermeidung von Versteifungsprägungen, die in ihren Abmessungen wesentlich über die Blechstärke hinausgehen,
bei vergleichbarer Steifigkeit eine weitere Gewichtseinsparung durch geringere Bemessung der Blechstärke
vorgesehen werden kann und wobei das neu zu schaffende Blech in herkömmlicher Weise wie glatte Karosseriebleche, weiterverarbeitbar sein soll.

Diese Aufgabe ist mit einem Karosserieblech der eingangs genannten Art nach der Erfindung durch das im Kennzeichen des Hauptanspruches erfaßte gelöst. Vorteilhafte Weiterbildungen ergeben sich nach den Unteransprüchen.

Diese erfindungsgemäße Ausbildung des Karosseriebleches, zu deren praktischen Verwirklichung lediglich entsprechend profilierte Formpreßwerkzeuge gehören, ist also damit verbunden, daß man aufgrund der ganzflächigen, rasterartigen Prägungsprofilierung, mit der also jede Verlaufsrichtung über den ganzen Blechzuschnitt im wesentlichen ohne Unterbrechung erfaßt ist, das Blech in seiner Stärke reduzieren und damit leichter machen kann. Man geht also von Feinblechen aus, die, an einem konkreten Fall orientiert, bspw. nicht mehr als 0,6 mm, sondern nur noch 0,4 mm Blechstärke haben, wobei aber dann wieder durch die abwechselnd ineinander übergehenden Positiv- und Negativprägungen in beiden Richtungen zur Mittelebene eine Gesamtblechstärke von bspw. 0,6 mm erhalten wird, wodurch dieses Blech eine Flächensteifigkeit erhält, die der Steifigkeit eines normalen glatten Bleches von 0,6 mm entspricht bzw. dieser nahekommt. Wesentlich ist dabei, daß das Blech in seiner Erscheinungsform nicht einem Wellblech im herkömmlichen Sinne oder der Welltafel im Sinne der vorerwähnten DE-PS 8 26 636 entspricht, sondern vielmehr einem weitgehend ebenen Blech mit beidseitig feinstrukturierter Fläche. Um den Unterschied diesbezüglich noch deutlicher zu machen, sei darauf hingewiesen, daß man an einem erfindungsgemäß ausgebildeten Blech, dessen Prägungen gewissermaßen eine "Mikrostrukturierung" darstellen, durchaus auch Formprägungen vorsehen kann, die dann gewissermaßen "makrostruktueller" Art sind. In Rücksicht auf die mögliche Gewichtsersparnis kann auch der Blechzuschnitt als mindestens zweilagiger Verbundzuschnitt ausgebildet sein, wobei es insbesondere möglich ist, die Lagen aus unterschiedlichem Material bspw. mit unterschiedlichen Qualitäten zu bilden, also bspw. aus dünnem Blech verschiedener Stahlsorten, normales Stahlblech mit Edelstahl, Einbindung normalen Stahlbleches zwischen zwei Lagen aus Edelstahl usw.

Die ganze erfindungsgemäße Formgebung ist natürlich ausschließlich für den Feinblechbereich bestimmt und von Interesse, für den man sich bisher darauf beschränkt hat, die notwendige Steifigkeit durch gewölbte, flächige Formgebungen oder spezielle Formprägungen mit größeren Prägungstiefen als der Blechstärke selbst zu erreichen. Mit dem erfindungsgemäß ausgebildeten Karosserieblech ist also praktisch ein neuer Blechwerkstoff geschaffen, der gewichtsreduziert praktisch die gleiche Steifigkeit hat wie ein damit vergleichbares herkömmliches, glattes Blech, das aber entsprechend dicker ist. Da das erfindungsgemäße Blech kein Wellblech im herkömmlichen Sinne ist, sondern ein Blech mit mehr oder weniger schwacher Flächenstrukturierung, ist ein derartiges Blech auch ohne weiteres in der gleichen Weise weiterverarbeitbar und mit gleichartigen oder glatten Blechen bspw. durch Punktschweißung verbindbar.

Das erfindungsgemäße Karosserieblech wird nachfolgend anhand der vergrößerten zeichnerischen Darstellung von Ausführungsbeispielen näher erläutert.

Es zeigt schematisch

Fig. 1    im Schnitt das erfindungsgemäße Grundprinzip der Blechausbildung;

Fig. 2 - 5 besondere Ausführungsformen des Bleches, ebenfalls im Schnitt und

Fig. 6 - 8 Draufsichten auf verschiedene Prägungsraster.

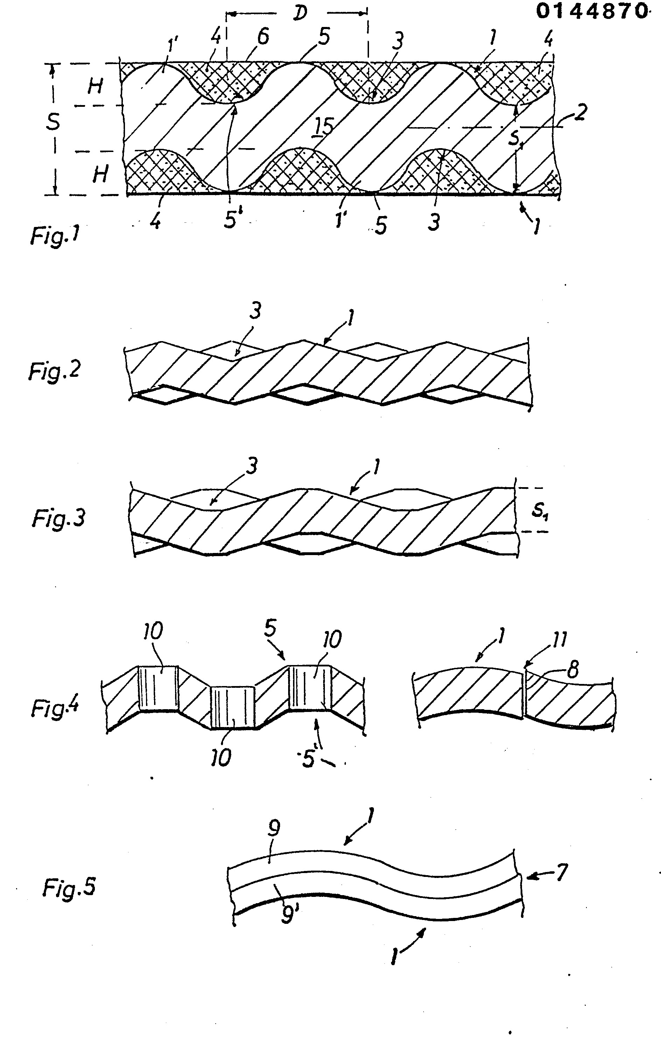

Wie aus der stark vergrößerten Schnittdarstellung gemäß Fig. 1 erkennbar, sind die Versteifungswölbungen 1 in Form von Wölbungsbuckeln ausgebildet, die nach beiden Seiten in bezug auf die Mittelebene 2

des Bleches herausgedrückt sind. Die Versteifungswölbungen 1 gehen in jeder Richtung raster- bzw.
waffeleisenartig wechselnd ineinander über, sind
über die ganze Blechfläche ausgewölbt bzw. eingetieft angeordnet und als Positivprägungen mit 1'
und als Negatifprägungen mit 1" bezeichnet. Durch
die Höhen- bzw. Tiefenbemessung der Versteifungswölbungen 1, nämlich etwa ein Drittel der Gesamtstärke S des geprägten Blechzuschnittes entsteht
ein durchgehender, gleichstarker Mittelbereich 15,
in dem mittig die neutrale Mittelebene 2 des Blechzuschnittes verläuft.

Die Fig. 2, 3 verdeutlichen nur andere mögliche Prägungsformen. Fig. 4 zeigt insoweit eine etwas abweichende Ausführungsform, als hierbei der Blechzuschnitt im Bereich der Prägungsmaxima 5 bzw. -minima
5' mit Löchern 10 versehen ist. Löcher können aber
auch bspw. in Form von Materialschnittversetzungen 8,
wie bei 11 in Fig. 4 angedeutet, in den Wölbungsflanken ausgebildet werden.

Gemäß Fig. 5 ist es auch möglich, den Blechzuschnitt
als mindestens zweilagigen Verbundzuschnitt auszubilden. Da diese Lagen, um wiederum beim erwähnten konkreten Beispiel zu bleiben, nur noch eine Stärke von
etwa 0,2 mm haben müssen, die Steifigkeit des ganzen

Verbundzuschnittes aber durch die Prägungen gewährleistet ist, kann auch für den speziellen Verwendungszweck der Einsatz von bspw. nichtrostendem
Edelstahl eher in Betracht gezogen werden. Es ist
in diesem Sinne auch möglich, unterschiedliche
Stahlblechqualitäten zu verwenden oder normales
Stahlblech zwischen zwei Edelstahllagen einzubinden.

Unter nochmaligem Bezug auf Fig. 1 sind die Eintiefungsräume 3 (dies gilt auch für alle anderen Ausführungsformen nach den Fig. 2 - 5) zwischen den
Versteifungswölbungen 1 mindestens einseitig (im
Ausführungsbeispiel beidseitig) mit einem mit den
metallverbindbaren, bzw. haftfähigen, in bezug auf
das Metall leichterem Füllstoff ausgefüllt, wobei
natürlich nichts entgegensteht, ggf. auch noch die
Prägungsmaxima  5, 5'  mit einem geeigneten Füllmaterial bspw. aus Kunststoff mit abzudecken. Diese
glatte Oberfläche 6 kann dann in herkömmlicher Weise lackiert werden.

Derartig ausgebildete Bleche sind, von dickeren
Blechstärken ausgehend, insbesondere auch für bspw.
Karosserieholmausbildungen und Karosserieböden bestimmt, wobei aber auch diese Ausgangsblechstärken
geringer sein können als die, die z. Zt. für solche
Zwecke benutzt werden. Soweit solche Holme als Konstruktionselemente aus Gewichtsersparnisgründen
mit Löchern od. dgl. Ausschnitten versehen sind,
kann das hier beschriebene, flächig strukturierte
Karosserieblech natürlich ebenfalls gelocht und/
oder zusätzlich mit versteifenden "Grobprägungen"
versehen werden.

Da sich das Gewicht derartiger Karosseriebleche
durch die Flächenstrukturierung bis zu 30 % reduzieren läßt, kann bspw. für eine normale Pkw-Karosserie eine entsprechende Gewichtsreduzierung für
der Sicht entzogene Karosseriekonstruktionsteile
in Rechnung gestellt werden, die noch größer wird,
wenn man die ganze Karosserie aus derartigen Blechen
fertigen würde, was durchaus möglich wäre, da es
sich ja um ein nach außen im wesentlichen ebenfalls
als "glatt" erscheinendes Blech handelt.

Es sei noch darauf hingewiesen, daß die Maßgabe
"der maximale Durchmesser der Versteifungswölbungen solle maximal dem Zehnfachen der Blechstärke
entsprechen" ihre Begründung darin findet, daß sich
die Durchmessergröße der Versteifungswölbungen einerseits nach dem tatsächlichen Verwendungszweck
des Karosseriebleches zu richten hat, andererseits
aber der Aussteifungseffekt wieder weitgehend verloren ginge, wenn die Durchmesser der Versteifungswölbungen, bezogen auf die Blechstärke, zu groß würden.

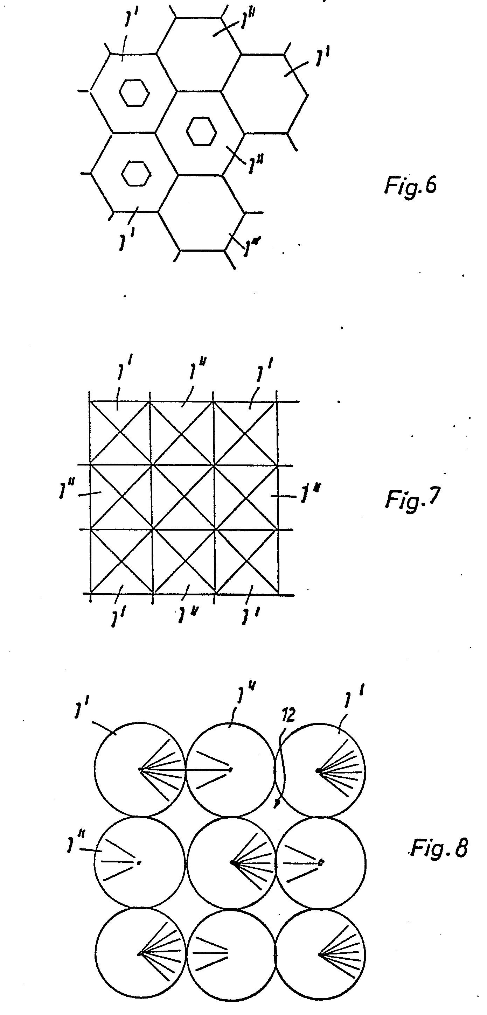

Die Fig. 6 schließlich zeigt ein Wabenmuster der Positiv- und Negativprägungen 1', 1", während es sich bei der Ausführungsform nach Fig. 7 um Pyramidenförmige Prägungen handelt. Bei Fig. 8 handelt es sich um kegelförmige Prägungen mit einer kreisförmigen Basis. Die ungeprägten Zwickelbereiche 12 entstehen dabei automatisch einfach dadurch, daß der ebene Ausgangsblechzuschnitt in diesen Bereichen nicht von den entsprechenden Prägewerkzeugen erfaßt wird. Versetzte Anordnungen der Prägungen im Sinne der Fig. 6 wären natürlich auch bei den Prägeformen gemäß Fig. 7, 8 zu bevorzugen, da dadurch die "Knickbereitschaft" eines derartigen Bleches reduziert wird.

0144870

- 1 -

15 121 E

Patentansprüche:

1. Karosserieblech, bestehend aus einem Blechzuschnitt mit nach entgegengesetzten Seiten
ausgeprägten, ineinander übergehenden Versteifungswölbungen,
dadurch gekennzeichnet,
daß die Versteifungswölbungen(1) aus dem
ebenen Blechzuschnitt nach beiden Seiten der
Blechzuschnittsfläche in Form von Kegeln, Kegelstümpfen, Wölbungsbuckeln od. dgl. ausgeprägt und
die Versteifungsprägungen(1) mit einer Tiefe versehen sind, die maximal einem Drittel der Gesamtstärke (S) des geprägten Blechzuschnittes entspricht und daß der maximale Durchmesser(D) der
Versteifungsprägungen (1) maximal etwa dem Zehnfachen der Blechstärke($S_1$) des Bleches entspricht.

2. Karosserieblech nach Anspruch 1,
dadurch gekennzeichnet,
daß die Stärke($S_1$) des Blechzuschnittes mit
o,1 bis 1 mm bemessen ist.

3. Karosserieblech nach Anspruch 2,
dadurch gekennzeichnet,
daß die Stärke ($S_1$) des Blechzuschnittes mit
o,4 - o,6 mm bemessen ist.

0144870

- 2 -

4. Karosserieblech nach Anspruch 2 oder 3,
   dadurch gekennzeichnet,
   daß der Blechzuschnitt als mindestens zweilagiger
   Verbundblechzuschnitt ausgebildet ist.


5. Karosserieblech nach Anspruch 4,
   dadurch gekennzeichnet,
   daß die mindestens zwei Lagen(9,9') des Verbund-
   blechzuschnittes(7) aus unterschiedlichem Material
   gebildet sind.

Fig.1

Fig.2

Fig.3

Fig.4

Fig.5

0144870

Fig.6

Fig.7

Fig.8